# EUROPÄISCHE PATENTSCHRIFT

(11) **EP 2 163 401 B1**
(45) Veröffentlichungstag und Bekanntmachung des Hinweises auf die Patenterteilung: **28.09.2011**
(21) Anmeldenummer: 09009195.0
(22) Anmeldetag: 15.07.2009
(51) Int. Cl.: B60B 35/04, B60G 9/00

(54) **Achskörper für eine Fahrzeugachse, insbesondere für eine Starrachse eines Kraft- und/oder Nutzfahrzeuges**
Axle body for a vehicle axle, especially a rigid axle for a motor and/or commercial vehicle
Corps d'axe pour un axe de véhicule, notamment pour un axe rigid d'un véhicule automobile et/ou utilitaire

(30) Priorität: 15.09.2008 DE 102008047059
(43) Veröffentlichungstag der Anmeldung: 17.03.2010
(73) Patentinhaber: MAN Truck & Bus AG, 80995 München (DE)
(72) Erfinder: Simon, Bernhard, 85435 Erding (DE); Wellner, Stefan, 85221 Dachau (DE)

(56) Entgegenhaltungen:
- EP-A1- 1 839 906
- EP-A2- 1 275 574
- DE-A1- 4 338 651
- DE-A1- 10 135 791
- JP-A- 7 215 004
- US-B1- 7 178 817

## Beschreibung

Die Erfindung betrifft einen Achskörper für eine Fahrzeugachse, insbesondere für eine Starrachse eines Kraft- und/oder Nutzfahrzeuges, nach dem Oberbegriff des Anspruchs 1.

Eine gattungsgemäße Achse ist aus der EP 1 839 906 A bekannt.

Starrachsen für Fahrzeuge sind allgemein bekannt und bestehen aus einem sogenannten Achskörper, auch Achsbrücke genannt, an die sich an gegenüberliegenden Enden die sogenannten Radteile für gelenkte und nicht gelenkte Achsen anschließen. Ferner sind am Achskörper zum Beispiel regelmäßig Auflagen oder Anbindungsstellen für die Federn vorgesehen. Weiter können auch Funktionen, wie beispielsweise die Lagerung des Stabilisators bzw. die Anbindung der Stoßdämpfer oder eines Panhardstabes in den Achskörper integriert sein.

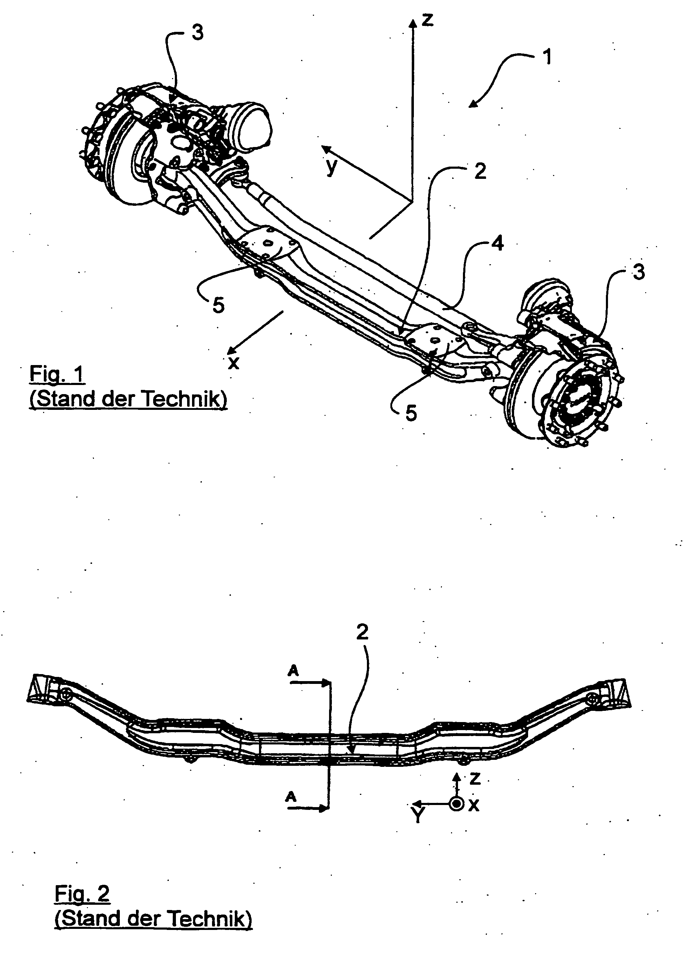

Eine derartige, eben beschriebene Starrachse gemäß dem Stand der Technik ist in der Fig. 1 mit dem Bezugszeichen 1 bezeichnet. Diese Starrachse 1 weist einen Achskörper 2 mit sich daran in Achskörper-Längserstreckungsrichtung, die im montierten Zustand der Fahrzeugquerrichtung y entspricht, anschließenden Radteilen 3 auf. Ferner ist in der Fig. 1 noch die Spurstange 4 gezeigt, sowie Federsättel 5.

In der Fig. 2 ist der Achskörper der Fig. 1 in einer Rückansicht sowie in einer Einzeldarstellung gezeigt. Dieser Darstellung ist sehr gut zu entnehmen, dass der Achskörper 2 sowohl geradlinig verlaufend als auch einfach oder mehrfach gekröpft ausgebildet sein kann.

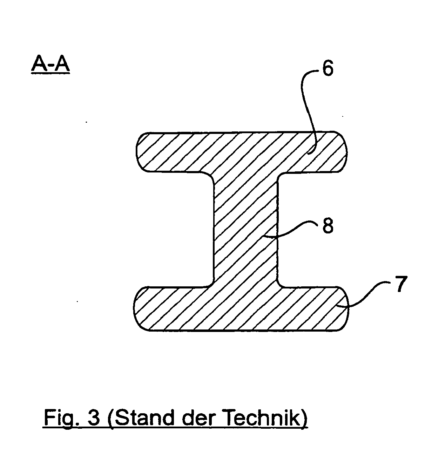

In der Fig. 3 ist schließlich ein Querschnitt entlang der Linie A-A durch diesen herkömmlichen Achskörper 2 gezeigt, aus dem ersichtlich ist, dass dieser Achskörper 2 durch ein Doppel-T-Profil gebildet ist, das einen Obergurt 6, einen Untergurt 7 sowie einen diese beiden verbindenen Mittelsteg 8 aufweist. Durch die Achslast, die notwendige Betriebssicherheit und das erforderliche Fahrverhalten sind der Gestaltung von Achskörpem im Doppel-T-Profil jedoch Grenzen gesetzt. Die Achse muss die im Betrieb über die Reifen auftretenden Kräfte aus dem Fahrbetrieb in das Fahrzeug einleiten können, die Betriebslast des Fahrzeugs halten und darf die Feder- und Fahreigenschaften nicht negativ beeinflussen. Um die Federeigenschaften nicht negativ zu beeinflussen, sind das Achsgewicht und hier besonders der Achskörper als Hauptbauteil möglichst leicht zu gestalten. Um die Fahreigenschaften und damit das elastokinematische Verhalten jedoch nicht negativ zu beeinflussen, kann die Steifigkeit der Achse nicht zu stark reduziert werden, so dass der Achskörper nicht in der zuvor gewünschten Weise gewichtsmäßig leichter gestaltet werden kann.

Ein weiteres Beispiel für einen Achskörperaufbau aus einem zylindrischen Rohr ist aus der US 2008/0150349 A1 bekannt.

Ausgehend von dem oben genannten Stand der Technik liegt der vorliegenden Erfindung die Aufgabe zugrunde, einen Achskörper für eine Fahrzeugachse, insbesondere für eine Starrachse eines Kraft- und/oder Nutzfahrzeuges, zu schaffen, der ohne Steifigkeitsverlust und damit ohne Beeinträchtigung der elastokinematischen Eigenschaften gleichzeitig gewichtsgünstig gestaltet werden kann.

Diese Aufgabe wird erfindungsgemäß gelöst mit den Merkmalen des Anspruchs 1. Vorteilhafte Weiterbildungen sind Gegenstand der Unteransprüche.

Gemäß Anspruch 1 ist der Mittelsteg in, bezogen auf dessen Querschnitt und/oder bezogen auf dessen Längserstreckung entlang des Achskörpers, vorgegebenen Mittelstegbereichen um einen definierten Winkel gegen die von der Fahrzeughochachse gebildete Vertikale in Fahrzeuglängsrichtung gesehen nach vorne oder nach hinten geneigt.

Wie erfinderseitige Versuche gezeigt haben, kann durch eine derartige geneigte bzw. schräge Mittelstegausbildung die erforderliche Biegesteifigkeit gegenüber einer Ausführung mit einem geraden bzw. vertikalen Steg erheblich gesteigert werden, ohne dass hierfür eine stärkere Dimensionierung des Mittelsteges und damit des Achskörpers erforderlich ist. Damit kann ein derartiger erfindungsgemäßer Achsträger sowohl mit hoher Steifigkeit als auch gewichtsgünstig konstruiert und ausgelegt werden.

Der geneigte Mittelstegbereich kann dabei bezogen auf seine Längserstreckungsrichtung in Achskörperlängsrichtung in definierten Bereichen, zum Beispiel im Bereich der Federauflagen bzw. Federsättel, gegebenenfalls auch wieder in eine vertikale Stegausrichtung übergehen, sofern dies in Richtung zu den beiden freien Achskörperenden hin, an dem die Radteile angeschlossen werden, aus konstruktiven oder bauraumtechnischen Gründen erforderlich sein sollte.

Besonders bevorzugt ist eine Ausgestaltung, bei der der Achskörper in Längserstreckungsrichtung gesehen mit unterschiedlichen Winkeln gegen die Fahrzeughochachse geneigte und/oder mit unterschiedlicher Geometrie, insbesondere mit unterschiedlichen Wandstärken und/oder Steglängen ausgebildete Mittelstegbereiche aufweist, um insbesondere unterschiedlichen Belastungssituationen am Achskörper bzw. im Obergurt- und/oder Untergurtbereich gerecht zu werden.

Gemäß einem besonders vorteilhaften Aspekt der vorliegenden Erfindung ist der Neigungswinkel des jeweiligen Mittelstegbereiches entsprechend wenigstens einer in diesem Mittelstegbereich am Achskörper, insbesondere am Obergurt und/oder am Untergurt, für einen definierten Belastungsfall angreifende Kraftkomponente und/oder entsprechend wenigstens eines in diesem Mittelstegbereich am Achskörper für einen definierten Belastungsfall angreifenden Moment vorgegeben. Mit einer derartigen Ausgestaltung des erfindungsgemäßen Achskörpers wird ein optimierter Neigungswinkel des Mittelsteges in einem vorgegebenen Bereich möglich, der in optimaler Weise auf die jeweils vorherrschenden Lastbedingungen ausgerichtet ist, so dass zum Beispiel am Ober- und/oder am Untergurt angreifende Kräfte, insbesondere eine Resultierende mehrerer Kraftkomponenten, über den Mittelsteg und damit über den Achskörper in das Fahrzeug bzw. den Fahrzeugaufbau eingeleitet werden können, ohne dass dies zu solchen Kraftspitzen an den jeweiligen Achskörperbereichen führt, die gegebenenfalls eine Beschädigung bzw. Verbiegung des Achskörpers in diesem Bereich bewirken würden. Durch diese optimierte Auslegung des Mittelsteges durch deren wenigstens bereichsweise vorgesehene Schrägstellung gegenüber der Vertikalen (Fahrzeughochachse) wird somit mit einer nach wie vor geringen Dimensionierung ein optimaler Kraftfluss am Achskörper zur Verfügung gestellt, der bewirkt, dass der Achskörper somit zum einen gewichtsgünstig und zum anderen auch biegesteif ausgebildet werden kann.

Der Neigungswinkel der jeweils vorgesehenen, gegebenenfalls unterschiedlichen Mittelstegbereiche wird dabei bevorzugt für definierte Belastungsfälle vorgegeben, wobei insbesondere das symmetrische Bremsen als Auslegungskriterium dient. Auch der Vertikalstoß auf den Achskörper kann gegebenenfalls alternativ oder zusätzlich als definierter Belastungsfall herangezogen werden.

Je nach den unterschiedlichen Auslegungen eines Achskörpers bzw. den vorgegebenen und/oder auftretenden Belastungsfällen im Betrieb eines Fahrzeuges können somit unterschiedlichste Geometrien in Verbindung mit einem schräg gestellten bzw. gegen die Fahrzeughochachse geneigten Mittelstegbereich vorgesehen werden. So können beispielsweise der Obergurt und/oder der Untergurt auf der dem Mittelsteig abgewandten Außenseite eine nach außen gekrümmte, konvexe Außenkontur aufweisen. Damit wird eine ballige, stabile und verwindungssteife Formgebung im Gurtbereich möglich.

Weiter können der Obergurt und der Untergurt im Wesentlichen gleich ausgebildet sein, wobei der Obergurt und der Untergurt aber alternativ dazu auch hinsichtlich ihrer Länge und/oder Breite und/oder Höhe unterschiedlich ausgebildet werden können.

Weiter können der Obergurt und der Untergurt in Fahrzeuglängsrichtung gesehen auch gegeneinander versetzt sein, das heißt asymmetrisch angeordnet sein. Auch eine gegebenenfalls winklige Ausrichtung des Ober- und/oder Untergurtes gegenüber eines durch die Fahrzeuglängsrichtung und die Fahrzeugquerrichtung aufgespannten Horizontalebene ist grundsätzlich möglich, ebenso wie die parallele Ausrichtung von Obergurt und Untergurt.

Gemäß einer weiteren besonders belastbaren Ausgestaltung der vorliegenden Erfindung verdicken sich vorgegebene Mittelstegbereiche im Querschnitt gesehen in Richtung zum Untergurt und/oder zum Obergurt hin bezüglich der Wandstärke und gehen mit einem definierten Radius in den Untergurt und/oder Obergurt über. Damit wird insbesondere ein vorteilhafter Kraftfluss im Übergangsbereich zwischen Mittelsteg und Ober- bzw. Untergurt und damit die unnötige Ausbildung von Kraftspitzen in diesem Bereich zuverlässig vermieden.

Die Erfindung wird nachfolgend anhand einer Zeichnung näher erläutert.

Es zeigen:
- Fig. 1: eine perspektivische Darstellung einer Starrachse gemäß dem Stand der Technik,
- Fig. 2: eine schematische Rückansicht eines Achskörpers des Standes der Technik nach Fig. 1,
- Fig. 3: schematisch einen Querschnitt entlang der Linie A-A durch den Achskörper gemäß dem Stand der Technik der Fig. 2,
- Fig. 4 - 7: beispielhaft verschiedene Querschnittsprofile eines erfindungsgemäßen Achskörpers für eine Fahrzeugachse, insbesondere für eine Starrachse eines Kraft- und/oder Nutzfahrzeuges, und
- Fig.8: schematisch einen Achskörper gemäß Fig. 2 mit in Achskörper- längserstreckungsrichtung gesehen unterschiedlich ausgebildeten Mittelstegbereichen.

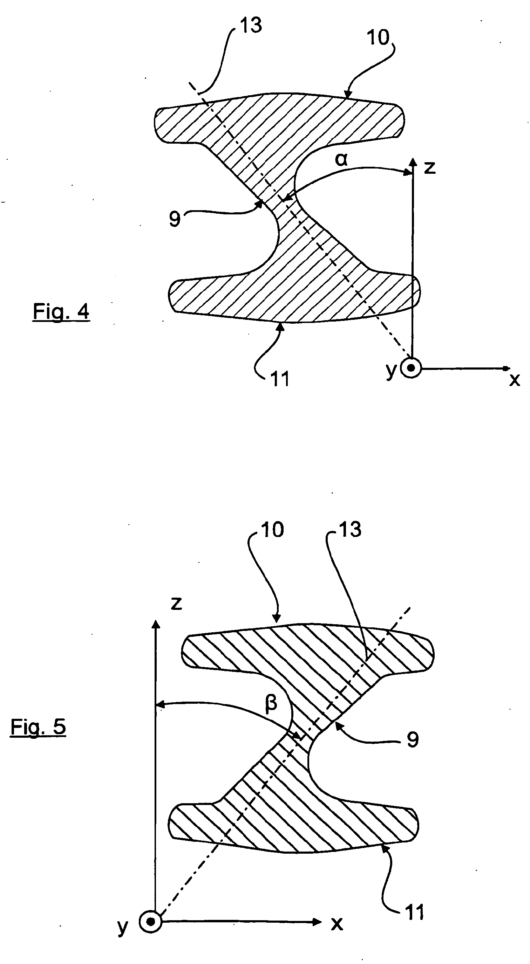

Die in den Fig. 4 bis 7 beispielhaft und exemplarisch dargestellten Querschnittsprofile können in einem Achskörper 2, wie er zuvor in Verbindung mit der Starrachse 1 beschrieben worden ist, verwendet werden, so dass bezüglich der Achskörper- bzw. Starrachsengestaltung auf die zuvor gemachten Ausführungen verwiesen wird. Im Unterschied zum Stand der Technik weist jedoch der erfindungsgemäße Achskörper 2 einen Mittelsteg 9 zwischen einem Obergurt 10 und einem Untergurt 11 auf, der, wie dies aus der Fig. 4 ersichtlich ist, gegenüber der eine Vertikale ausbildenden Fahrzeughochachsenrichtung z um einen vorgegebenen Winkel α nach hinten gegen die Fahrtrichtung geneigt ist. Die Fahrtrichtung bzw. Fahrzeuglängsrichtung wird hier durch das Bezugszeichen x angegeben, während Bezugszeichen y die Fahrzeugquerachsenrichtung darstellt.

Der Winkel α wird dabei entsprechend einer jeweiligen Belastungssituation für einen vorgegebenen Mittelstegbereich in Fahrzeugquerrichtung y gesehen vorgegeben, so dass in Achskörperlängserstreckungsrichtung bzw. Fahrzeugquerrichtung y gesehen Mittelstegbereiche mit unterschiedlichen Mittelstegneigungswinkeln vorgesehen sein können.

So kann beispielsweise je nach Belastungssituation in einem bestimmten Mittelstegbereich auch vorgesehen sein, wie dies in der Fig. 5 dargestellt ist, dass der Mittelsteg 9 gegenüber der Fahrzeughochachse z um einen vorgegebenen Winkel β nach vorne in Fahrtrichtung bzw. Fahrzeuglängsrichtung x geneigt ist.

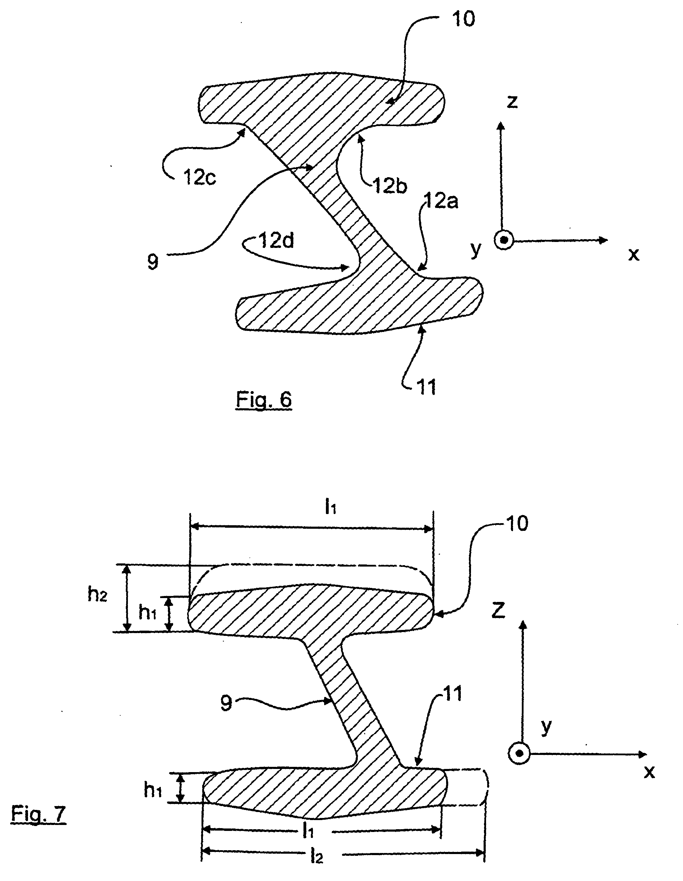

In der Fig. 6 ist schließlich eine zur Fig. 4 alternative Ausgestaltung eines Mittelstegbereiches gezeigt, bei dem der Mittelsteg länger ausgebildet ist als in der Fig. 4.

In der Fig. 7 ist schließlich schematisch eine Ausgestaltung gezeigt, bei der mit durchgezogenen Linien der Obergurt 10 und der Untergurt 11 als im Wesentlichen Gleichteile ausgebildet sind. In Verbindung mit dem Obergurt 10 ist strichliert dargestellt, dass dieser auch eine Höhe h₂ aufweisen kann, die höher ist als eine Höhe h₁. Bezüglich des Untergurtes 11 ist strichliert eingezeichnet, dass dieser auch eine Länge I₂ aufweisen kann, die länger ist als eine Länge L₁. Selbstverständlich kann die Höhen- bzw. Längenausbildung bezüglich des Obergurts 10 und des Untergurts 11 auch genau anders herum gewählt sein. Die Darstellung der Fig. 7 soll lediglich beispielhaft und äußerst schematisch verdeutlichen, dass grundsätzlich eine asymmetrische Auslegung im Hinblick auf Obergurt 10 und Untergurt 11 möglich ist.

Wie dies den Fig. 4 bis 7 weiter zu entnehmen ist, weist hier beispielhaft sowohl der Obergurt 10 als auch der Untergurt 11 auf der dem Mittelsteg 9 abgewandten Außenseite eine nach außen zur, bezogen auf den gezeigten Querschnitt, Gurtmitte hin gekrümmte, konvexe Außenkontur auf.

Bezogen auf das Querschnittsprofil kann die Wandstärke des Mittelstegs 9 ebenfalls in Achskörperlängserstreckungsrichtung gesehen variieren bzw. unterschiedlich ausgebildet sein, ebenso wie die Übergangsradien 12a, 12b, 12c und 12d, wie dies in der Fig. 6 schematisch und beispielhaft eingezeichnet ist. In der Fig. 6 sind jeweils unterschiedliche Radien eingezeichnet. Je nach Bedarf können gegebenenfalls auch gleiche Radien bzw. andere Radien an den jeweiligen Übergangsstellen zum Obergurt 10 bzw. zum Untergurt 11 ausgebildet sein.

Die in den Fig. 4 und 5 strichliert eingezeichnete Mittelstegachse 13 entspricht dabei hinsichtlich ihres Neigungswinkels gegen die Fahrzeughochachse z vorzugsweise einer Resultierenden von zum Beispiel auf den Achskörper 2 in diesem Achskörperbereich einwirkenden Belastungskraftkomponenten, so dass eine gezielte Krafteinleitung und ein gezielter Kraftfluss in den Fahrzeugaufbau möglich ist.

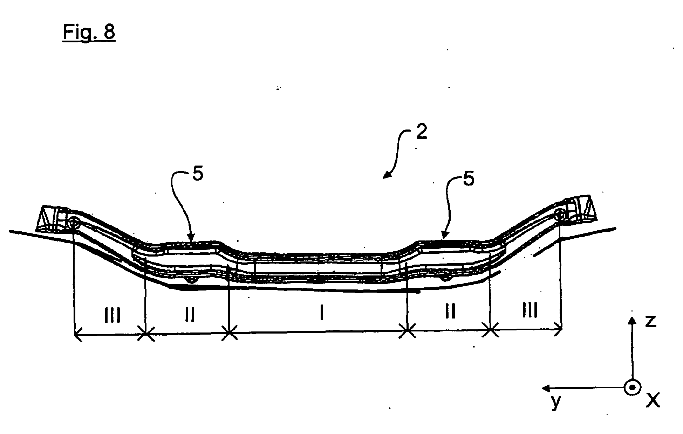

Wie dies schematisch in der Fig. 8 eingezeichnet ist, kann beispielsweise vorgesehen sein, dass der Achskörper im Bereich I mit einem Mittelsteg 9 gestaltet ist, der einen anderen Neigungswinkel gegenüber der Fahrzeughochachse z aufweist als ein sich daran zu beiden Seiten des Bereichs I anschließender Bereich II, in dem jeweils die Federsättel 5 vorgesehen und ausgebildet sind. Gegebenenfalls können auch die beiden Bereiche II unterschiedlich ausgebildet sein, falls dies erforderlich sein sollte.

Weiter können sich an die Bereiche II dann zu den beiden Achskörperendseiten hin Mittelstegbereiche III anschließen, die zum Beispiel mit einem vertikalen Mittelsteg im Sinne der Fig. 3 bzw. auch vollflächig, das heißt mit aufgelöstem Doppel-T-Profil, ausgebildet sein können. Ebenso können die Bereiche III aber auch wiederum mit einem Mittelsteg 9 gestaltet sein, der gegenüber dem Bereich II und/oder dem Bereich I mit einem anderen Neigungswinkel gegen die Fahrzeughochachse geneigt ist.

Mit einem derartigen erfindungsgemäßen Achskörper 2 kann damit für unterschiedliche Achskörperbereiche eine jeweils optimierte Auslegung derselben erzielt werden, und zwar in Verbindung mit einer sowohl gewichtsgünstigen als auch biegesteifen Ausgestaltung.

## Patentansprüche

1. Achskörper (2) für eine Fahrzeugachse (1), insbesondere für eine Starrachse eines Kraft- und/oder Nutzfahrzeuges, wobei der sich im montierten Zustand im Wesentlichen in Fahrzeugquerrichtung erstreckende Achskörper (2) wenigstens in Teilbereichen mit einem Doppel-T-Profil ausgebildet ist, das einen Obergurt (10) und einen Untergurt (11) aufweist, die mittels eines Mittetsteges (9) miteinander verbunden sind, **dadurch gekennzeichnet, dass** der Mittelsteg (9) in, bezogen auf dessen Querschnitt und/oder bezogen auf dessen Längserstreckung entlang des Achskörpers (2), vorgegebenen Mittelstegbereichen um einen definierten Winkel (α; β) gegen die durch die Fahrzeughochachse (z) gebildete Vertikale in Fahrzeuglängsrichtung (x) gesehen nach vorne oder nach hinten geneigt ist.

2. Achskörper nach Anspruch 1, **dadurch gekennzeichnet, dass** der Achskörper (2), in Längserstreckungsrichtung (y) gesehen, an unterschiedliche Belastungssituationen mit unterschiedlichen Winkeln (α; β) gegen die Fahrzeughochachse (z) geneigte und/oder mit unterschiedlicher Geometrie ausgebildete, insbesondere mit unterschiedlichen Wandstärken und/oder Steglängen ausgebildete, Mittelstegbereiche aufweist.

3. Achskörper nach Anspruch 1 oder 2, **dadurch gekennzeichnet, dass** der Neigungswinkel (α; β) des jeweiligen Mittelstegbereiches in Abhängigkeit von wenigstens einer in diesem Mittelstegbereich am Achskörper (2), insbesondere am Obergurt (10) und/oder Untergurt (11), für einen definierten Belastungsfall angreifenden Kraftkomponente, und/oder in Abhängigkeit von wenigstens einem in diesem Mittelstegbereich am Achskörper (z) für einen definierten Belastungsfall angreifenden Moment vorgegeben ist.

4. Achskörper nach Anspruch 3, **dadurch gekennzeichnet, dass** der Neigungswinkel (α; β) des Mittelstegbereiches in einem definierten Achskörperbereich der Richtung der für einen definierten Belastungsfall am Achskörper (2) angreifenden größten Kraftkomponente entspricht, insbesondere der Richtung einer Resultierenden von am Obergurt (10) und am Untergurt (11) angreifenden Kraftkomponenten entspricht.

5. Achskörper nach Anspruch 3 oder 4, **dadurch gekennzeichnet, dass** als definierter Belastungsfall symmetrisches Bremsen und/oder ein Vertikalstoß auf den Achskörper (2) vorgegeben ist.

6. Achskörper nach einem der Ansprüche 1 bis 5, **dadurch gekennzeichnet, dass** der Obergurt (10) und/oder der Untergurt (11) auf der dem Mittelsteg (9) abgewandten Außenseite eine nach außen gekrümmte, konvexe Außenkontur aufweisen.

7. Achskörper nach einem der Ansprüche 1 bis 6, **dadurch gekennzeichnet, dass** der Obergurt (10) und der Untergurt (11) im Wesentlichen gleich ausgebildet sind.

8. Achskörper nach einem der Ansprüche 1 bis 6, **dadurch gekennzeichnet, dass** der Obergurt (10) und der Untergurt (11) hinsichtlich deren Länge und/oder Breite und/oder Höhe unterschiedlich ausgebildet sind.

9. Achskörper nach einem der Ansprüche 1 bis 8, **dadurch gekennzeichnet, dass** der Obergurt (10) und der Untergurt (11) in Fahrzeuglängsrichtung (x) gesehen gegeneinander versetzt sind.

10. Achskörper nach einem der Ansprüche 1 bis 9, **dadurch gekennzeichnet, dass** sich vorgegebene Mittelstegbereiche im Querschnitt gesehen in Richtung zum Untergurt (11) und/oder zum Obergurt (10) hin bezüglich der Wandstärke verdicken und mit einem definierten Radius in den Untergurt (11) und/oder Obergurt (10) übergehen.

## Claims

1. Axle body (2) for a vehicle axle (1), especially a rigid axle for a motor and/or commercial vehicle, whereby the axle body (2) when fitted extends essentially in transverse direction on the vehicle and is fitted at least in partial areas with a double T-profile, which T-profile is provided with an upper strap (10) and a lower strap (11), which straps are connected to each other using a centre web (9), **characterised in that** the centre web (9) is inclined to the front or to the rear by a defined angle (a; β) from the vertical drawn through the vehicle upper axis (z) in the vehicle longitudinal direction (x) in specified centre web areas with regard to the cross-section and/or the longitudinal extension of the centre web along the axle body (2).

2. Axle body in accordance with claim 1, **characterised in that** the axle body (2), viewed in the longitudinal extension direction (y), is provided with centre web areas for varying load situations tilted at different angles (a; β) from the vehicle upper axis (z) and/or provided with differing geometry, and in particular provided with differing wall thicknesses and/or web lengths.

3. Axle body in accordance with claim 1 or claim 2, **characterised in that** the tilt angle (a; β) of the respective centre web area is specified depending on at least one force component in this centre web area on the axle body (2), in particular at the upper strap (10) and/or the lower strap (11), applied for a defined load case and/or depending on at least one torque in this centre web area on the axle body (z) applied for a defined load case.

4. Axle body in accordance with claim 3, **characterised in that** the tilt angle (a; β) of the centre web area in a defined axle-body area corresponds to the direction of the largest force component applied for a defined load case on the axle body (2), and in particular corresponds to the direction of a force resulting from force components applied to the upper strap (10) and the lower strap (11).

5. Axle body in accordance with claim 3 or claim 4, **characterised in that** symmetrical braking and/or a vertical impact on the axle body (2) are specified as a defined load case.

6. Axle body in accordance with one of claims 1 to 5, **characterised in that** the upper strap (10) and/or the lower strap (11) are provided with an outwardly curved, convex outer contour on the external side facing away from the centre web (9).

7. Axle body in accordance with one of claims 1 to 6, **characterised in that** the upper strap (10) and the lower strap (11) are essentially identical in design,

8. Axle body in accordance with one of claims 1 to 6, **characterised in that** the upper strap (10) and the lower strap (11) differ in design with regard to their length and/or width and/or height.

9. Axle body in accordance with one of claims 1 to 8, **characterised in that** the upper strap (10) and the lower strap (11) are positioned offset to each other in the vehicle longitudinal direction (x).

10. Axle body in accordance with one of claims 1 to 9, **characterised in that** specified centre web areas thicken with regard to the wall thickness in cross-sectional view in the direction of the lower strap (11) and/or the upper strap (10) and are incorporated into the lower strap (11) and/or the upper strap (10) with a defined radius.

## Revendications

1. Corps d'essieu (2) pour un essieu de véhicule (1), en particulier pour un essieu rigide d'un véhicule à moteur et/ou véhicule industriel, auquel cas le corps d'essieu (2) s'étendant à l'état monté essentiellement dans le sens transversal du véhicule est formé au moins dans des zones partielles d'un profilé en double Té qui présente une semelle supérieure (10) et une semelle inférieure (11) reliées l'une à l'autre au moyen d'une entretoise médiane (9), **caractérisé en ce que** l'entretoise médiane (9) est inclinée, vu dans le sens longitudinal du véhicule (x), vers l'avant ou vers l'arrière à un angle défini (a ; β) par rapport à la verticale formée par l'axe vertical du véhicule (z) dans des parties d'entretoise médiane spécifiées en référence à sa section transversale et/ou à son extension longitudinale le long du corps d'essieu (2).

2. Corps d'essieu selon la revendication 1, **caractérisé en ce que** le corps d'essieu (2) présente, vu dans le sens d'extension longitudinale (y), dans différentes situations de sollicitation, des parties d'entretoise médiane inclinées à différents angles (a ; β) par rapport à l'axe vertical du véhicule (z) et/ou formées selon une géométrie différente, en particulier formées avec des épaisseurs de paroi différentes et/ou des longueurs d'entretoise médiane différentes.

3. Corps d'essieu selon la revendication 1 ou 2, **caractérisé en ce que** l'angle d'inclinaison (a ; β) de chaque partie d'entretoise médiane est spécifié en fonction d'au moins une composante de force intervenant dans cette partie d'entretoise médiane au niveau du corps d'essieu (2), en particulier au niveau de la semelle supérieure (10) et/ou de la semelle inférieure (11) pour un cas de sollicitation défini, et/ou en fonction d'au moins un couple intervenant dans une partie d'entretoise médiane au niveau du corps d'essieu (z) pour un cas de sollicitation défini.

4. Corps d'essieu selon la revendication 3, **caractérisé en ce que** l'angle d'inclinaison (a ; β) de la partie d'entretoise médiane correspond dans une partie de corps d'essieu définie au sens de la composante de force la plus grande intervenant pour un cas de sollicitation défini au niveau du corps d'essieu (2) et correspond en particulier au sens d'une résultante des composantes de force intervenant au niveau de la semelle supérieure (10) et au niveau de la semelle inférieure (11).

5. Corps d'essieu selon la revendication 3 ou 4, **caractérisé en ce qu'**un freinage symétrique et/ou un choc vertical sur le corps d'essieu (2) sont spécifiés comme cas de sollicitation défini.

6. Corps d'essieu selon l'une des revendications 1 à 5, **caractérisé en ce que** la semelle supérieure (10) et/ou la semelle inférieure (11) présentent un contour extérieur convexe, courbé vers l'extérieur sur le côté extérieur opposé à l'entretoise médiane (9).

7. Corps d'essieu selon l'une des revendications 1 à 6, **caractérisé en ce que** la semelle supérieure (10) et la semelle inférieure (11) sont formées pour l'essentiel de manière identique.

8. Corps d'essieu selon l'une des revendications 1 à 6, **caractérisé en ce que** la semelle supérieure (10) et la semelle inférieure (11) sont formées de manière différente au regard de leur longueur et/ou de leur largeur et/ou de leur hauteur.

9. Corps d'essieu selon l'une des revendications 1 à 8, **caractérisé en ce que** la semelle supérieure (10) et la semelle inférieure (11) sont décalées l'une par rapport à l'autre vu dans le sens longitudinal du véhicule (x).

10. Corps d'essieu selon l'une des revendications 1 à 9, **caractérisé en ce que** des parties d'entretoise médiane spécifiées s'épaississent vu en coupe transversale dans le sens vers la semelle inférieure (11) et/ou vers la semelle supérieure (10) en référence à l'épaisseur de paroi et se fondent dans la semelle inférieure (11) et/ou semelle supérieure (10) à un rayon défini.
